# EUROPÄISCHE PATENTSCHRIFT

(11) **EP 2 435 863 B1**
(45) Veröffentlichungstag und Bekanntmachung des Hinweises auf die Patenterteilung: **08.05.2013**
(21) Anmeldenummer: 10719949.9
(22) Anmeldetag: 31.05.2010
(51) Int. Cl.: G01V 8/20

(54) **WAAGE MIT ENERGIEWANDLER ALS BEDIENEINHEIT**
SCALE HAVING AN ENERGY CONVERTER AS CONTROL UNIT
BALANCE DOTEE D'UN CONVERTISSEUR D'ENERGIE SERVANT D'UNITE DE COMMANDE

(30) Priorität: 29.05.2009 DE 102009023368; 29.05.2009 DE 102009023367; 29.05.2009 DE 102009023366
(43) Veröffentlichungstag der Anmeldung: 04.04.2012
(73) Patentinhaber: Leifheit AG, 56377 Nassau (DE)
(72) Erfinder: DENK, Andre, 45131 Essen (DE); EMTER, Artjom, 56077 Koblenz (DE); STANGE, Pedro, 65582 Diez (DE); MODDICK, Christian, 48317 Drensteinfurth (DE); DOMBROWSKY, Markus, 56377 Nassau (DE)
(74) Vertreter: Bungartz, Klaus Peter
(86) Internationale Anmeldenummer: PCT/EP2010/057566
(87) Internationale Veröffentlichungsnummer: WO 2010/136608

(56) Entgegenhaltungen:
- WO-A1-2006/022637
- DE-A1- 3 824 226
- DE-U1-202005 017 886
- US-A- 3 781 842

## Beschreibung

### Technisches Gebiet

Die Erfindung betrifft eine Waage, insbesondere eine Personen- und/ oder Küchen- und/ oder Back- und/ oder Diät- und /oder Brief- und/ oder Haushalts- und/ oder Küchenwaage mit einer Wägeeinheit und einem Energiewandler zum Umwandeln von optischer Energie in elektrische Energie.

### Stand der Technik

Waagen mit einer digitalen Anzeigevorrichtung zum Anzeigen eines mittels der Waage gemessenen Gewichts sind bereits seit Jahren bekannt. Die Energieversorgung der Anzeigevorrichtung oder eines Steuergeräts der Waage kann mittels Batterien und/ oder aufladbaren Akkumulatoren und/ oder eines Netzgeräts erfolgen.

So offenbart DE 38 24 226 A1 eine Waage mit einer digitalen Anzeigevorrichtung die mit einer Energieversorgungsvorrichtung verbunden ist. Bei der Energieversorgungsvorrichtung handelt es sich um eine fluoreszierende Platte und mehrere Solarzellen. Die Solarzellen sind an den Stirnseiten der fluoreszierenden Platte angebracht, wobei die fluoreszierende Platte Lichtstrahlen mit einer bestimmten Wellenlänge absorbiert und selber Lichtstrahlen mit einer anderen Wellenlänge emittiert. Diese emittierten Lichtstrahlen werden der Solarzelle zugeführt.

Des Weiteren sind aus dem Stand der Technik Waagen bekannt, in denen ein Bedienen einer Funktion der Waage mittels einer Bedieneinheit, wie beispielsweise Tasten, Schalter oder Sensoren erfolgt. Unter Funktionen einer Waage werden im Folgenden die Funktionen, wie beispielsweise ein Einstellen eines Datums oder einer Uhrzeit an der Waage, ein Scrollen durch ein Menü der Waage oder ein Starten einer Tara-Funktion verstanden. Die zuvor genannten Funktionen sind nur beispielhafte Aufzählungen, so dass auch noch weitere Funktionen der Waage vorstellbar sind.

Eine derartige Waage weist den Nachteil auf, dass an der Waage die Bedieneinheiten vorgesehen sind, an denen sich Verunreinigungen sammeln können, und die bei der Herstellung der Waage einen bedeutenden Kostenfaktor darstellen. Im Falle das die Bedieneinheiten als Sensoren ausgebildet sind, besteht eine Gefahr darin, dass eine Fehlbedienung der Waage durch beispielsweise eine elektromagnetische Einstrahlung auf den Sensor der Waage und/ oder durch eine Annäherung eines metallischen Gegenstands an den Sensor der Waage erfolgen kann.

Zur Erhöhung der Energieausbeute der optischen Strahlung ist aus der DE 38 24 226 A1 eine Waage mit einer fluoreszierenden Platte, einer Solarzelle und mehreren Reflektoren bekannt, die an einem Teil der die fluoreszierenden Platte begrenzenden Wände angeordnet sind. Die Solarzellen sind an den Stirnseiten der fluoreszierenden Platte angebracht. Die fluoreszierende Platte absorbiert die Lichtstrahlen mit einer bestimmten Wellenlänge und emittiert selber Lichtstrahlen mit einer anderen Wellenlänge. Diese emittierten Lichtstrahlen werden der Solarzelle unter Ausnutzung der Reflektoren zugeführt. Bei der Zuführung der Lichtstrahlen in die Solarzelle kann es vorkommen, dass ein Teil der emittierten Lichtstrahlen wieder aus der Waage austritt.

Eine derartige Waage weist den Nachteil auf, dass nur ein Teil der optischen Energie der absorbierten Lichtstrahlen den Solarzellen zugeführt werden kann, da ein Teil des emittierten Lichts bereits aus der Waage ausgetreten ist, bevor es die Solarzellen erreicht. Ein weiterer Nachteil besteht darin, dass in der Waage mehrere Solarzellen verwendet werden, um sicherzustellen, dass ein größerer Anteil des emittierten Lichts den Solarzellen zugeführt werden kann, um den Wirkungsgrad bezüglich der Ausnutzung der in die Waage einfallenden Lichtstrahlen zu steigern. Diese Solarzellen weisen große Abmessungen auf, damit eine mit Lichtstrahlen zu beaufschlagende Fläche der Solarzelle möglichst groß ist. Da Solarzellen relativ teuer sind, erhöhen sich bei einer Verwendung von mehreren Solarzellen die Kosten für die Waage.

### Darstellung der Erfindung

Es ist eine erste Aufgabe der vorliegenden Erfindung, eine Waage bereitzustellen, die geringere Herstellungskosten verursacht und ein Ansammeln von Verunreinigungen verhindert. Eine weitere Aufgabe der Erfindung besteht darin, Fehlbedienungen der Waage zu vermeiden.

Die Aufgabe wird erfindungsgemäß durch den Gegenstand des Patentanspruchs 1 und das Verfahren nach Anspruch 8 gelöst. Vorteilhafte Ausgestaltungen der Erfindung sind in den Unteransprüchen gekennzeichnet.

Eine weitere Aufgabe der vorliegenden Erfindung ist es, eine Waage bereitzustellen, die geringere Kosten aufweist und gleichzeitig einen hohen Wirkungsgrad bezüglich der Ausnutzung der in die Waage einfallenden Lichtstrahlen besitzt. Die Aufgabe wird erfindungsgemäß durch die Merkmale des Patentanspruchs 8 gelöst.

Vorteilhafte Ausgestaltungen der Erfindung sind in den Unteransprüchen gekennzeichnet.

Die Erfindung hat bezüglich der ersten Aufgabe den Vorteil, dass ein Energiewandler zusätzlich zu seiner ursprünglichen Funktion, nämlich der Umwandlung von optischer Energie der Lichtstrahlen in elektrische Energie, als Bedieneinheit zum Bedienen einer Funktion einer Waage verwendet werden kann. Somit kann auf an der Waage angebrachte Bedieneinheiten, wie beispielsweise Schalter, Sensoren und Tasten, verzichtet werden. Folglich verringern sich die Herstellungskosten für die Waage, und ein Ansammeln von Verunreinigungen an diesen Bedieneinheiten wird vermieden. Ein weiterer Vorteil der Verwendung von Energiewandlern als Bedieneinheiten besteht darin, dass diese unempfindlich gegenüber einer auf die Waage wirkenden elektromagnetischen Einstrahlungen und/ oder einer Annäherung von metallischen Gegenständen bezüglich der Waage sind, so dass sich die Gefahr einer Fehlbedienung einer Waage verringert.

Durch die Verwendung einer Messeinheit wird ein Messwert, wie beispielsweise eine an dem Energiewandler anliegende Spannung und/oder eine an dem Energiewandler anliegende Stromstärke, gemessen. Der so ermittelte Wert wird von der Messeinheit an eine Steuereinheit, die basierend auf dieser Information einen Bedienbefehl für die Bedienung einer Funktion der Waage ausgibt, gesendet. Somit kann anhand der dem Energiewandler gemessenen Werte ein Bedienbefehl für ein Bedienen einer Funktion der Waage auf einfache Weise erzeugt werden. Maßgeblich für die Auslösung des Bedienbefehls ist dabei zunächst die Unterschreitung eines Schwellwertes, aus der die Steuereinheit die Auslösung der Funktion errechnet.

Natürlich kann alternativ oder zusätzlich auch die Überschreitung eines Schwellwertes eine Funktion auslösen. So kann zum Beispiel die Abschattung des Energiewandlers das Einschalten der Waage bewirken, während "das Loslassen", also das Wieder-Exponieren des Energiewandlers mit optischer Energie, ein Zurücksetzen der Waage in eine Nullstellung (Tara-Funktion) auslösen kann. Die Auslösung des Bedienbefehls kann bei allen Funktionen von einer bestimmten zeitlichen Verweildauer abhängig gemacht werden, innerhalb derer der Schwellwert unterschritten bleibt.

Ferner besteht eine vorteilhafte Ausgestaltung der Erfindung darin, dass nach einem Betätigen eines ersten Energiewandlers innerhalb eines Zeitraums ein zweiter Energiewandler betätigt werden muss. Der zweite Energiewandler ist dabei vorzugsweise am Rand und/ oder an einem gegenüberliegenden Ende des ersten Energiewandlers angeordnet. Somit wird sichergestellt, dass nicht versehentlich eine ungewollte Funktion der Waage durch beispielsweise ein Abstellen eines zu wiegenden Gegenstands auf einen Energiewandler gestartet wird.

Schließlich ist es möglich, eine Mehrzahl von Energiewandlern nebeneinander oder untereinander anzuordnen, so dass aus der zeitlichen Auslösung eines "Schalters", also des Unterschreitens einer Stromstärke oder einer Spannung an einem Energiewandler relativ zu benachbarten Energiewandlern eine zusätzlich Funktion abgeleitet werden kann. So können zum Beispiel drei unabhängige Energiewandler nebeneinander angeordnet sein. Streicht der Benutzer nun mit einem Finger langsam von links nach rechts, wird der zuerst den linken, dann den mittleren und anschließend den rechten Energiewandler abschatten. Aus diesem zeitlichen Ablauf der Signalerzeugung an den einzelnen Energiewandlern kann dann wiederum ein spezieller Bedienbefehl erzeugt werden. Streicht der Benutzer dagegen von rechts nach links, kann ein anderer Befehl generiert werden.

So kann zum Beispiel eine Kombination von 3x3 Energiewandlern, die in drei Reihen untereinander und drei Spalten nebeneinander angeordnet sind, 16 Schaltfunktionen erzeugen.

Besonders vorteilhaft ist die Erfindung mit Konzentratoren anwendbar, die die einfallende optische Energie auf die Energiewandler konzentrieren, da hier die Schaltfunktion eindeutiger ist. Allerdings ist die Konzentration der optischen Energie nicht auf die Anwendung in Verbindung mit der Schaltfunktion, sowie sie oben beschrieben ist, beschränkt. Sie kann auch zur Optimierung der Strahlungsausbeute genutzt werden, ohne dass hierüber eine Bedienfunktion ausgelöst werden müsste. Die Anmelderin behält sich daher vor, die Merkmale der nachfolgend beschriebenen Strahlmodifikation separat und unabhängig von den zuvor beschriebenen Merkmalen zu beanspruchen.

Bezüglich der mit der Lösung der ersten Aufgabe kombinierbaren, aber nicht zwangsläufig zugehörigen Lösung der zweiten Aufgabe hat die Erfindung hat den Vorteil, dass ein Konzentrator vorgesehen ist, der die in ihn einfallenden Lichtstrahlen zu einem Energiewandler umlenkt, der beispielsweise als Solarzelle ausgebildet sein kann. Somit ist sichergestellt, dass die in den Konzentrator der Waage einfallenden Lichtstrahlen vollständig dem Energiewandler zugeführt werden können. Im Ergebnis erhöht sich der Wirkungsgrad der Wage bezüglich der Ausnutzung der in sie einfallenden Lichtstrahlen.

Ein weiterer Vorteil besteht darin, dass durch die gezielte Umlenkung der Lichtstrahlen mittels des Konzentrators bereits die Verwendung nur eines Energiewandlers ausreicht, um den Energiebedarf der Waage zu decken. Der Energiewandler kann auch aufgrund der gezielten Umlenkung und Bündelung der Lichtstrahlen durch den Konzentrator kleinere Abmessungen als die bisher bei Waagen eingesetzten Energiewandler aufweisen. Diese Vorteile resultieren daher, da mittels des Konzentrators sichergestellt ist, dass dem Energiewandler die optische Energie der Lichtstrahlen mit einer hohen Energiedichte zugeführt wird.

Ein großer Vorteil ist die Verwendung sogenannter "nicht abbildender Optiken" als Konzentrator zur Umlenkung und Konzentration der optischen Energie auf den Energiewandler, da es hier auf ein exaktes Abbilden eines optischen Bildes nicht ankommt. Wichtig ist nur, dass ein großer Raumwinkel der Strahlung auf einen kleinen Raumwinkel mit höherer Konzentration abgebildet wird.

Eine weitere vorteilhafte Ausgestaltung der Erfindung besteht darin, dass der Energiewandler in einem Brennpunkt des Konzentrators angeordnet ist. In dieser Anordnung werden der Umwandlungseinheit Lichtstrahlen mit der größten Energiedichte zugeführt, so dass sich der Wirkungsgrad bezüglich der Ausnutzung der in die Waage einfallenden Lichtstrahlen erhöht. Ein weiterer Vorteil besteht darin, dass ein Energiewandler mit kleineren Abmessungen als die in den bisherigen Waagen eingesetzten Energiewandler verwendet werden kann.

Ferner besteht eine vorteilhafte Ausgestaltung der Erfindung darin, dass sich bei einer Verwendung einer Fresnellinse als Konzentrator die Dicke des Konzentrators verringert. Folglich ist es möglich eine Waage mit einem Wägeteller, mit dem der Konzentrator einstückig ausgebildet oder lösbar verbunden ist, vorzusehen, dessen Abmessungen klein sind.

Eine weitere vorteilhafte Ausgestaltung der Erfindung besteht darin, dass eine Wägeeinheit aus einem fluoreszierenden Material besteht, und dass der Energiewandler und der Konzentrator an einer Seite, vorzugsweise einer Stirnseite, der Wägeeinheit angeordnet sind. In dieser Ausbildung der Waage kann dem Energiewandler zusätzlich zu den durch den Konzentrator umgelenkten Lichtstrahlen auch noch die durch das fluoreszierende Material emittierten Lichtstrahlen zugeführt werden. Folglich erhöht sich die dem Energiewandler insgesamt mittels den Lichtstrahlen zugeführte Energiemenge, wodurch die Abmessungen des Energiewandlers verkleinert werden können. Zusätzlich besteht ein Vorteil dieser Ausgestaltung darin, dass auch Lichtstrahlen, die nicht in den Konzentrator dafür aber in die Wägeeinheit einfallen, ausgenutzt werden können.

### Kurze Beschreibung der Zeichnungen

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:

Fig. 1 eine Waage mit einem Energiewandler als eine Bedieneinheit in einer ersten Ausführungsform,

Fig. 2 eine Waage mit einem Energiewandler als eine Bedieneinheit in einer zweiten Ausführungsform.

Fig. 3 eine Waage mit Konzentrator in einer dritten Ausführungsform, mit einem als plankonvexer Linse ausgebildeten Konzentrator,

Fig. 4 eine Waage in einer vierten Ausführungsform, in der der Konzentrator als eine Fresnellinse ausgebildet ist,

Fig. 5 eine Waage in einer fünften Ausführungsform, in der der Konzentrator als ein Spiegelelement ausgebildet ist, und der Energiewandler an der Wägeeinheit angeordnet ist,

Fig. 6 eine Waage in einer sechsten Ausführungsform, in der der Konzentrator als ein Spiegelelement ausgebildet ist, und der Energiewandler an einem Wägeteller angeordnet ist,

Fig. 7 eine Vorderansicht einer Waage in einer siebten Ausführungsform,

Fig. 8 eine Seitenansicht der in Fig. 7 gezeigten Waage und

Fig. 9 eine Frontansicht einer als Stehwaage ausgebildeten Waage.

### Bester Weg zur Ausführung der Erfindung

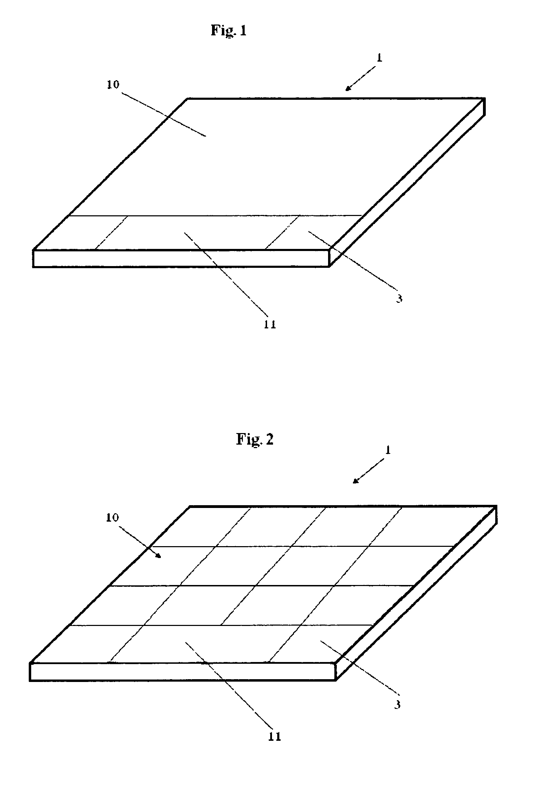

Die in Fig. 1 gezeigte Waage 1 nach einer ersten Ausführungsform weist eine Wägeeinheit 10 zum Abstellen eines zu wiegenden Gegenstands und eine Anzeigevorrichtung 11 auf, die an einem Ende der Wägeeinheit 10 angeordnet ist. Das Gewicht des auf die Wägeeinheit 10 abgestellten zu wiegenden Gegenstands wird mittels in Fig. 1 nicht gezeigter Wägemittel gemessen und mittels der Anzeigevorrichtung 11 dargestellt.

Zusätzlich weist die Waage 1 einen ersten und einen zweiten Energiewandler 3, auf, die jeweils benachbart zur Anzeigevorrichtung 11 angeordnet sind. Bei den Energiewandlern 3 handelt es sich beispielsweise um Solarzellen, die die von Lichtstrahlen bereitgestellte optische Energie in elektrische Energie umwandeln können. Die Energiewandler 3 sind miteinander verbunden bzw. verschaltet, so dass sie für unterschiedliche Anwendungsbereiche die erforderliche Spannung bzw. Leistung bereitstellen können.

Ferner weist die Waage 1 eine Messeinheit und eine Steuereinheit auf, die in der Fig. 1 nicht gezeigt sind. Mittels der Messeinheit wird ein an dem jeweiligen Energiewandler vorliegender Messwert, wie beispielsweise eine Spannung und/ oder eine Stromstärke, gemessen. Alternativ kann die Messeinheit die Messwerte auch an anderen Stellen messen. Die Stellen müssen dabei so gewählt werden, dass ein Rückschluss auf die an den einzelnen Energiewandlern anliegenden Werte getroffen werden kann.

Die Messeinheit ist mit der Steuereinheit verbunden und überträgt die gemessenen Werte an die Steuereinheit. Die Steuereinheit kann mindestens einen Bedienbefehl erzeugen, sobald ein durch die Messeinheit gemessener Wert unterhalb eines in der Steuereinheit hinterlegten Grenzwerts liegt. Der Grenzwert ist derart gewählt, dass der an dem Energiewandler 3 gemessene Wert automatisch kleiner ist als der Grenzwert, wenn der Energiewandler 3 abgedeckt wird. Eine Überprüfung, ob der durch die Messeinheit gemessene Wert unterhalb des Grenzwerts liegt, kann durch die Messeinheit oder die Steuereinheit erfolgen. Der Bedienbefehl ermöglicht eine Bedienung der jeweiligen Funktion der Waage. So kann mittels des Bedienbefehls beispielsweise das Datum und/ oder die Uhrzeit eingestellt, die Tara-Funktion gestartet oder durch ein in der Waage 1 hinterlegtes Menü gescrollt werden.

Das Verfahren zum Bedienen einer Funktion der Waage 1 nach der ersten Ausführungsform wird im Folgenden beschrieben. Um durch die Steuereinheit einen Bedienbefehl zur Bedienung einer Funktion der Waage 1 zu erzeugen, wird einer der beiden Energiewandler 3 derart abgedeckt, dass in den Energiewandler 3 keine Lichtstrahlen einfallen können. Das Abdecken des Energiewandlers 3 kann beispielsweise durch einen Finger oder einen Gegenstand erfolgen. Durch das Abdecken eines der beiden Energiewandler 3 fällt die Spannung bzw. die Stromstärke in dem jeweiligen abgedeckten Energiewandler 3, wobei der entsprechende Messwert von der Messeinheit gemessen wird.

Die Messeinheit übermittelt die gemessenen Werte an die Steuereinheit. In diesem Fall überprüft die Steuereinheit, ob der durch die Messeinheit gemessene Wert unterhalb eines Grenzwerts liegt. In diesem Fall erkennt die Steuereinheit, dass der an dem abgedeckten Energiewandler 3 gemessene Wert kleiner als der Grenzwert ist, so dass die Steuereinheit den Bedienbefehl, wie beispielsweise zum Starten der Tara-Funktion oder zum Bedienen einer anderen Funktion der Waage 1 erzeugt und somit die Funktion an der Waage 1 ausgeübt wird.

Um eine zufällige Abdeckung des Energiewandlers 3 und damit ein nicht gewolltes Starten einer Funktion der Waage 1 zu vermeiden, kann beispielsweise in der Steuereinheit eine Abfrageroutine vorgesehen sein, die ein Erzeugen eines Bedienbefehls nur bewirkt, wenn ein zweiter Energiewandler 3 zusätzlich zum ersten Energiewandler 3 abgedeckt wird. Die Messwerte des zweiten Energiewandlers 3 werden von der Messeinheit gemessen und an das Steuergerät gesendet. Im Steuergerät wird überprüft, ob die an dem ersten und zweiten Energiewandler gemessenen Werte jeweils unterhalb eines Grenzwerts liegen. Ist dies der Fall, erzeugt das Steuergerät einen Bedienbefehl zum Bedienen einer Funktion der Waage 1.

Dabei kann als zusätzliche bzw. alternative Bedingung für die Erzeugung des Bedienbefehls verlangt werden, dass der zweite Energiewandler 3 innerhalb einer bestimmten Zeitspanne abgedeckt wird, und/ oder dass der erste und/ oder zweite Energiewandler 3 für eine bestimmte Zeitdauer abgedeckt bleiben. Die Abfrageroutine in der Steuereinheit ist nicht nur auf die zuvor genannten Bedingungen beschränkt, so dass auch andere Bedingungen für ein Erzeugen eines Bedienbefehls vorstellbar sind.

Fig. 2 zeigt eine Waage mit einem Energiewandler 3 in einer zweiten Ausführungsform, der als eine Bedieneinheit für eine Funktion der Waage verwendet werden kann. Die Waage 1 nach der zweiten Ausführungsform weist analog zur Waage 1 nach der ersten Ausführungsform eine Wägeeinheit 10 eine Anzeigevorrichtung 11 und einen Energiewandler 3 auf. Im Gegensatz zur Waage 1 nach der ersten Ausführungsform weist die Waage 1 nach der zweiten Ausführungsform mehrere Energiewandler 3 auf, die über die gesamte Fläche der Wägeeinheit 10 verteilt angeordnet sind. Die einzelnen Energiewandler 3 sind dabei elektrisch miteinander verbunden. Die Waage 1 nach der zweiten Ausführungsform weist analog zur Waage 1 nach der ersten Ausführungsform eine Messeinheit, die einen an den einzelnen Energiewandlern vorherrschenden Messwert misst, und eine Steuereinheit zum Erzeugen eines Bedienbefehls auf. Der Aufbau und die Wirkungsweise der Messeinheit und des Steuergeräts entsprechen dem Aufbau und der Wirkungsweise der Messeinheit und des Steuergeräts nach der zweiten Ausführungsform.

Das Verfahren zur Bedienung der Waage 1 wird im Folgenden erklärt. Zum Starten einer Funktion der Waage 1 wird ein Energiewandler 3 derart abgedeckt, dass in ihn keine Lichtstrahlen einfallen können. Dabei kann im Steuergerät eingestellt werden, dass zum Starten einer Funktion der Waage 1 ein beliebiger Energiewandler 3 oder ein bestimmter Energiewandler 3 abgedeckt werden muss. Die Messeinheit misst einen an dem Energiewandler vorherrschenden Messwert, wie beispielsweise die Spannung und/ oder die Stromstärke, und übermittelt diesen an das Steuergerät. Das Steuergerät erzeugt einen Bedienbefehl, da der an dem abgedeckten Energiewandler 3 gemessene Wert unterhalb des im Steuergerät hinterlegten Grenzwerts ist.

Um ein ungewolltes Starten einer Funktion der Waage 1 beispielsweise durch ein Abdecken eines Energiewandlers 3 durch einen zu wiegenden Gegenstand zu verhindern, kann das Steuergerät derart eingestellt werden, dass es erst einen Bedienbefehl erzeugt, wenn noch weitere Bedingungen erfüllt sind. Diese Bedingungen können beispielsweise sein, dass innerhalb einer bestimmten Zeitspanne ein zweiter Energiewandler 3 abgedeckt werden muss, oder dass der erste und/ oder der zweite Energiewandler 3 für eine bestimmte Zeitdauer abgedeckt bleiben müssen.

Die Gefahr eines zufälligen Abdeckens und damit ein ungewolltes Starten einer Funktion der Waage 1 durch einen zu wiegenden Gegenstand wird reduziert, wenn der erste und zweite abgedeckte Energiewandler 3 an sich gegenüberliegenden Enden der Waage 1 angeordnet sind bzw., wenn der erste und/ oder zweite Energiewandler 3 am Rand der Wägeeinheit 10 angeordnet sind. Als eine alternative oder zusätzliche Bedingung ist ebenfalls vorstellbar, dass mehr als zwei Energiewandler abgedeckt werden müssen, damit in der Steuereinheit ein Bedienbefehl erzeugt wird. Es sind auch noch weitere Bedingungen zum Vermeiden eines ungewollten Startens einer Funktion der Waage 1 vorstellbar.

### Weg(e) zur Ausführung der Erfindung

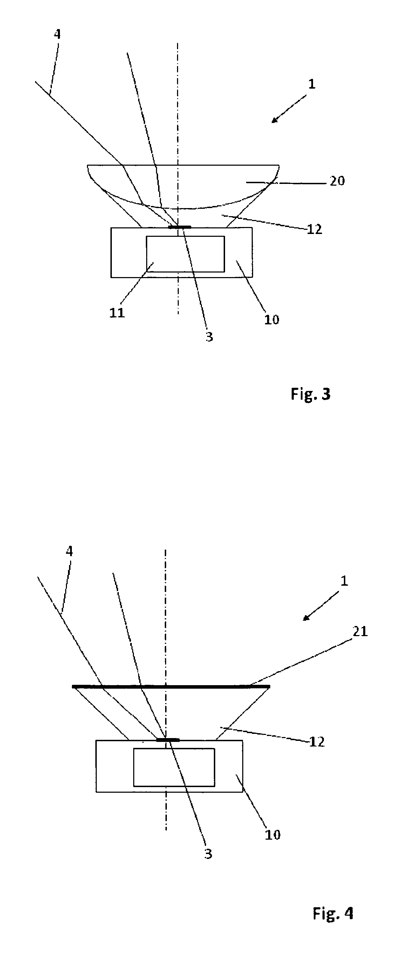

Die in Fig. 3 gezeigte dritte Ausführungsform einer Waage 1 setzt sich aus einer Wägeeinheit 10 und einem Wägeteller 12 zusammen. Zusätzlich weist die in Fig. 3 gezeigte Waage 1 einen Energiewandler 3 auf, der optische Energie in elektrische Energie umwandelt. Dieser Energiewandler kann beispielsweise als Solarzelle ausgebildet sein. Der Energiewandler 3 ist an der Wägeeinheit 10 angeordnet. Er kann alternativ an dem der Wägeeinheit 10 zugewandten Ende des Wägetellers 12 angeordnet sein. In der Wägeeinheit 10 ist eine Anzeigevorrichtung 11 angeordnet, die den von der Waage 1 gemessenen Wert anzeigt. Die Anzeigevorrichtung 11 stellt die gemessenen Werte beispielsweise als digitale Anzeige dar und ist mit einer in Fig. 3 nicht gezeigten Energieversorgungsvorrichtung verbunden. Die durch den Energiewandler 3 bereitgestellte elektrische Energie kann in eine in der Energieversorgungsvorrichtung vorgesehene Speichereinheit, wie beispielsweise einen Akkumulator, oder direkt der Anzeigevorrichtung 11 zugeführt werden.

Der Wägeteller 12 weist eine kegelstumpfe Form auf und kann mit der Wägeeinheit 10 lösbar verbunden sein. Der Wägeteller 12 kann alternativ eine andere Form aufweisen. An dem der Wägeeinheit 10 entfernten Ende des Wägetellers 12 ist ein Konzentrator 20 vorgesehen. Der Konzentrator 20 ist in dieser Ausführungsform als eine plankonvexe Linse 20 ausgebildet, die die in sie eintretenden Lichtstrahlen 4 zum Energiewandler 3 hin umlenkt und bündelt. Die gebogene Seite der plankonvexen Linse 20 ist an dem der Wägeeinheit 10 zugewandten Ende der plankonvexen Linse 20 vorgesehen. Der Konzentrator 20 kann einstückig mit dem Wägeteller 12 ausgebildet oder mit diesem lösbar verbunden sein. Ferner besteht der Konzentrator 20 aus einem transparenten lichtdurchlässigen Material.

Die in den Konzentrator 20 eintretenden Lichtstrahlen 4 werden derart umgelenkt, dass sie in einem Brennpunkt gebündelt werden. Genauer gesagt werden die Lichtstrahlen 4 durch die plankonvexe Linse 20 bei deren Eintritt in die Linse und bei deren Austritt aus der Linse jeweils gebrochen bzw. umgelenkt. In dieser Ausführungsform sind die Abmessungen der Wägeeinheit 10, des Wägeteller 12 und des Konzentrators 20 derart gewählt, dass der Energiewandler 3 in der Nähe des Brennpunkts des Konzentrators 20 vorgesehen ist. Der Energiewandler 3 kann alternativ dazu im Brennpunkt des Konzentrators 20 angeordnet werden.

Fig. 4 zeigt eine vierte Ausführungsform einer Waage 1. Die Form der Wägeeinheit 10, des Wägetellers 12 und des Energiewandlers 3 der Waage 1 nach der vierten Ausführungsform und die Anordnung dieser Bauteile zueinander entsprechen der Form und Anordnung dieser Bauteile in der Waage 1 nach der dritten Ausführungsform.

Die Waage 1 der vierten Ausführungsform unterscheidet sich von der Waage nach der dritten Ausführungsform lediglich dadurch, dass in der Waage 1 der vierten Ausführungsform der Konzentrator 21 als eine transparente lichtdurchlässige Fresnellinse 21 ausgebildet ist. Die in den Konzentrator 21 einfallenden Lichtstrahlen 4 werden durch diese zu einem Brennpunkt umgelenkt, in dem oder in der Nähe davon der Energiewandler 3 angeordnet ist. Der Konzentrator 21 kann mit dem Wägeteller 12 einstückig ausgebildet oder mit diesem lösbar verbunden sein. Die gezackte Seite der Fresnellinse ist an dem der Wägeeinheit 10 zugewandten Ende der Fresnellinse vorgesehen. Der Wägeteller 12 weist analog zum in Fig. 3 gezeigten Wägeteller 12 eine kegelstumpfe Form auf, wobei er nicht auf diese Form beschränkt ist.

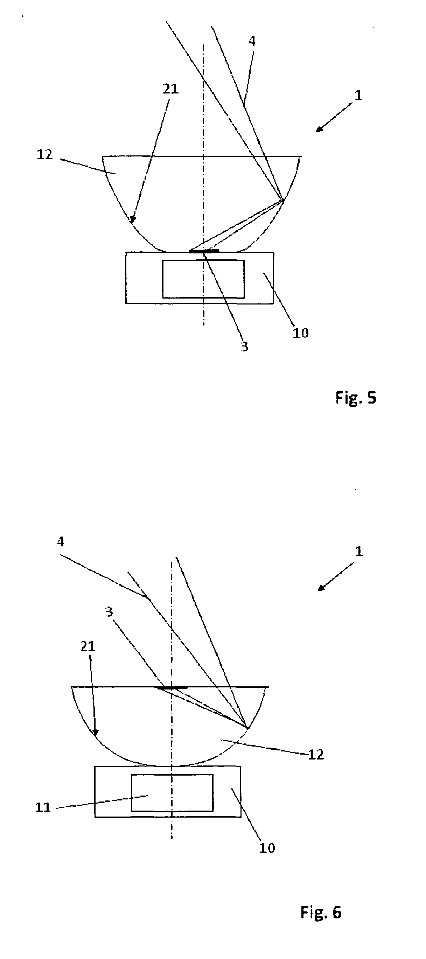

Fig. 5 zeigt eine fünfte Ausführungsform der Waage 1. In dieser Ausführungsform ist im Unterschied zu den in Fig. 3 und 2 dargestellten Waagen der Wägeteller 12 schalenförmig ausgebildet. Das von der Wägeeinheit 10 entfernte Ende des Wägetellers 12 weist ein lichtdurchlässiges Ende auf. So ist sichergestellt, dass Lichtstrahlen 4 in einen Innenraum des schalenförmigen Wägetellers 12 eindringen können. An der Innenseite des Wägetellers 12 ist der Konzentrator 21 in Form von Spiegelelementen 22 vorgesehen.

Diese Spiegelelemente 22 können die in den Innenraum des Wägetellers 12 eingedrungenen Lichtstrahlen 4 reflektieren. Die Spiegelelemente 22 sind derart ausgebildet und die Position des Energiewandlers 3 ist derart gewählt, dass unabhängig von dem Einfallswinkel der in den Innenraum des Wägetellers 12 eindringenden Lichtstrahlen 4, diese zu der Position des Energiewandlers 3 umgelenkt werden.

Die Form der Wägeeinheit 10 und des Energiewandlers 3 und die Anordnung dieser Bauteile zueinander entsprechen jeweils der Form und Anordnung dieser Bauteile in den in Fig. 3 und 2 gezeigten Waagen 1.

Fig. 6 zeigt eine sechste Ausführungsform der Waage 1. Die in Fig. 6 gezeigte Waage 1 unterscheidet sich von der in Fig. 5 gezeigten Waage 1 dadurch, dass in der in Fig. 6 gezeigten Waage 1 der Energiewandler 3 an einem von der Wägeeinheit 10 entfernten Ende des Wägetellers 12 angeordnet ist.

Ein weiterer Unterschied zwischen der in Fig. 5 und der in Fig. 6 gezeigten Waage besteht darin, dass der Innendurchmesser des in Fig. 6 gezeigten schalenförmigen Wägetellers 12 größer ist als der Innendurchmesser des in Fig. 5 gezeigten schalenförmigen Wägetellers 12. Die Spiegelelemente 22 sind analog zu den Spiegelelementen der in Fig. 5 gezeigten Waage 1 auf einer Innenseite des Wägetellers 12 angeordnet. Der größere Innendurchmesser des in Fig. 6 gezeigten Wägetellers 12 stellt sicher, dass die Spiegelelemente 22 derart an der Innenseite des Wägetellers 12 ausgebildet sind, dass sie die in den Innenraum des Wägetellers 12 einfallenden Lichtstrahlen 4 zum Energiewandler 3 hin umlenken.

Der Energiewandler 3 wird derart am Wägeteller 12 angeordnet, dass sichergestellt ist, dass dieser mit beispielsweise der Anzeigevorrichtung 11 elektrisch verbunden ist. Im Falle, dass der Wägeteller 12 lösbar mit der Wägeeinheit 10 verbunden ist, kann der Energiewandler 3 über eine Steckvorrichtung mit beispielsweise der Anzeigevorrichtung 11 und/ oder einer Speichereinheit einer Energieversorgungsvorrichtung elektrisch verbunden sein.

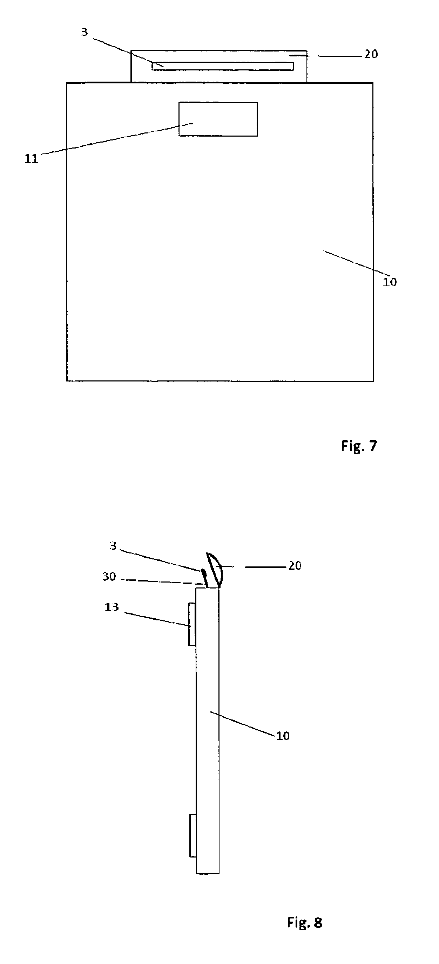

Fig. 7 zeigt eine Waage 1 nach einer siebten Ausführungsform in einer Vorderansicht und Fig. 8 zeigt die in Fig. 7 gezeigte Waage 1 in einer Seitenansicht. In dieser Ausführungsform sind der Energiewandler 3 und der Konzentrator 20 jeweils an einer Stirnseite der Wägeeinheit 10 angeordnet, wobei die Waage 1 keinen Wägeteller aufweist. Zusätzlich weist die Waage 1 an der Wägeeinheit 10 angebrachte Fußelemente 13 auf. Diese Fußelemente 13 tragen die Waage 1, wenn diese auf den Boden gelegt wird.

Der Konzentrator 20 ist als eine plankonvexe Linse 20 ausgebildet und näher zu der Seite der Wägeeinheit 10, die den Lichtstrahlen 4 ausgesetzt ist, angeordnet als der Energiewandler 3. Der Energiewandler 3 ist an einem Halteelement 30 angebracht, das sich von der Stirnseite der Wägeeinheit 10 erstreckt. Der Konzentrator 20 lenkt die in ihn einfallenden Lichtstrahlen 4 zu dem Energiewandler 3 um, so dass der Energiewandler 3 die zugeführte optische Energie in elektrische Energie umwandeln kann. Der Energiewandler 3 kann im Brennpunkt des Konzentrators 20 oder in der Nähe davon angeordnet sein. Diese elektrische Energie kann der Anzeigevorrichtung 11 oder einer Speichereinheit der Energieversorgungsvorrichtung zugeführt werden.

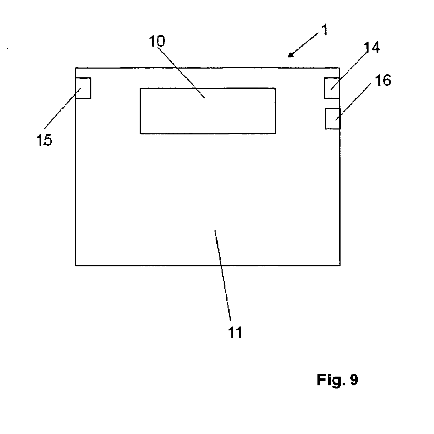

Die in Fig. 9 gezeigte Waage 1 ist beispielhaft als Stehwaage ausgebildet weist eine Platte mit einer Standfläche 11 auf. Analog sind die folgenden Merkmale aber auch auf eine Küchenwaage oder jede andere eingangs erwähnte Waagenart anwendbar. Die Standfläche 11 entspricht einer Fläche, auf die sich die zu wiegende Person zum Wiegen stellt. Unterhalb der Standfläche 11 ist eine in Fig. 9 nicht gezeigte Messvorrichtung vorgesehen, die die Körperanalysewerte ermittelt. Sofern bei dieser Waage ein Energiewandler (3) oder ein Konzentrator eingesetzt wird, muss dieser natürlich elektrisch mit der Steuerung verbunden sein, dass heißt in der Regel über ein Kabel mit der Standfläche oder dem Wägeteller bzw. dem zugehörigen Gehäuse verbunden sein.

Zusätzlich weist die Waage 1 eine Sensoreinheit 15 auf, die zum Erfassen von verschiedenen Größen dient. So können damit beispielsweise die Temperatur und/ oder Luftfeuchtigkeit in der unmittelbaren Umgebung der Waage gemessen werden. Mittels der Sensoreinheit 15 können aber auch noch weitere Größen gemessen werden.

Ferner weist die Waage 1 eine Empfangseinheit 14 auf, die Informationen von einer Sensorvorrichtung oder einer Sendevorrichtung empfängt. Die in Fig. 9 nicht dargestellte Sensorvorrichtung kann innerhalb oder außerhalb des Raums, in dem sich die Waage 1 befindet, angeordnet sein. Die Sensorvorrichtung wird vorzugsweise zum Messen der Umweltparameter verwendet, so dass es zweckmäßig ist, diese im Freien anzuordnen. Es können aber auch noch weitere Größen damit gemessen werden.

Bei der Sendevorrichtung kann es sich um eine Sendevorrichtung einer Wetterstation handeln, die kontinuierlich Informationen über die Umweltparameter versendet. Die Datenübertragung zwischen Sensorvorrichtung beziehungsweise Sendevorrichtung und der an der Waage angeordneten Empfangseinheit kann über Funk oder über Infrarot erfolgen. Bei der Sendevorrichtung kann es sich auch um eine Sendevorrichtung handeln, die mit dem Internet verbunden ist. Die Datenübertragung kann in diesem Fall über WLAN erfolgen.

Des Weiteren weist die Waage eine in Fig. 9 nicht dargestellte Alarmerzeugungseinheit auf. Die Alarmerzeugungseinheit dient zum Erzeugen eines Signals, wenn ein voreingestellter Wert bezüglich. den Körperanalysewerten und/ oder den Umweltparametern ermittelt und/ oder empfangen wird. Das durch die Alarmerzeugungseinheit erzeugte Signal kann optisch und/ oder akustisch wahrgenommen werden. Zusätzlich zu dem optischen und/ oder akustischen Signal kann die Alarmerzeugungseinheit bewirken, dass über eine auf der Waage 1 angebrachte Sendeeinheit 16 eine Benachrichtigung an ein voreingestelltes Empfangsgerät gesendet wird. So wird diese Benachrichtigung beispielsweise als eine Kurznachricht an ein Mobiltelefon und/ oder per Funk an einen Funkempfänger gesendet.

Die Sendeeinheit 16 und die Empfangseinheit 14 sind in Fig. 9 als getrennte Bauteile dargestellt. Es sind Ausführungen vorstellbar, bei denen die Sende- und Empfangseinheit 16, 14 als ein Bauteil ausgebildet sind. Die Sende- und Empfangseinheit 16, 14 können als Antennen ausgebildet sein.

Ferner weist die Waage 1 eine in der Platte befindliche Anzeigevorrichtung 10 auf. Die Anzeigevorrichtung 10 dient zum Anzeigen der mittels der Waage 1 gemessenen Körperanalysewerte. Zusätzlich dient die Anzeigevorrichtung 10 zum Anzeigen von den über die Empfangseinheit 14 empfangenen Informationen. Die Anzeigevorrichtung kann als LCD ausgebildet sein und einen Touchscreen aufweisen. Mittels des Touchscreen können beispielsweise die Bedingungen zum Auslösen eines Signals durch die Alarmerzeugungseinheit eingegeben werden.

Die Anzeigevorrichtung 10 kann eine analoge und eine digitale Anzeigevorrichtung aufweisen. So kann mittels der analogen Anzeigevorrichtung das Gewicht der zu wiegenden Person mittels einem Zeigemittel und einer Skaleneinheit angezeigt werden. Es ist möglich, dass die digitale Anzeigevorrichtung derart eingestellt wird, dass sie gleichzeitig mit der analogen Anzeigevorrichtung das Gewicht der zu wiegenden Person anzeigt. Die digitale Anzeigevorrichtung dient zum Anzeigen der mittels der Empfangseinheit 14 empfangenen Informationen und des durch die Alarmerzeugungseinheit erzeugten optischen Signals. Die Waage 1 kann derart eingestellt werden, dass wenn sich die Waage 1 nicht in einem Waagevorgang und/ oder einem Analysevorgang befindet, die Anzeigevorrichtung 10 das Datum und die aktuelle Zeit anzeigt.

Ferner weist die Waage 1 eine in Fig. 9 nicht gezeigte Schnittstelle zur Kommunikation mit einem anderen Gerät, vorzugsweise einem Rechner, oder einem Bussystem einer Hauselektronik auf. Bei dem Bussystem kann es sich beispielsweise um ein EIB Bussystem handeln. Bei der Schnittstelle kann es sich um einen USB-Anschluss handeln. Es sind aber auch noch andere Schnittstellen denkbar. Mittels der USB-Schnittstelle können die in einer Speichereinheit gespeicherten Werte an einen Rechner übertragen werden. Die übertragenen Werte können dann am Rechner analysiert werden.

Die (in Fig. 9 nicht gezeigte) Speichereinheit dient zum Abspeichern der gemessenen Körperanalysewerte und der empfangenen Umweltparameter. Es ist auch eine Ausführungsform vorstellbar, in der nur die Körperanalysewerte und Umweltparameter mittels der Anzeigevorrichtung angezeigt werden. Die Umweltparameter und Körperanalysewerte könnten beispielsweise über die Sendeeinheit an eine außerhalb der Waage vorgesehene Speichereinheit versendet werden.

Unabhängig vom Ort der Speichereinheit können in beiden oben dargestellten Ausführungsformen die Körperanalysewerte und Umweltparameter jeweils mit einer Zeitangabe abgespeichert werden. So ist sichergestellt, dass bei einer Analyse der Daten mittels beispielsweise eines Rechners die Umweltparameter und Körperanalysewerte richtig zueinander zugeordnet werden können und eine genaue Analyse sichergestellt ist.

Auch die Ausführung der Waage 1 mit einer Standfläche 10, einer Anzeigevorrichtung 11 und einer Empfangseinheit 14 bzw. Sendeeinheit 16 zum Empfangen von Informationen, die an der Anzeigevorrichtung 11 angezeigt werden, kann unabhängig vom Energiewandler und Konzentrator Verwendung finden. Auch hier behält sich der Anmelder vor, zu einem späteren Zeitpunkt einen selbständigen Schutz auf diese in Verbindung mit Figur 9 beschriebenen Merkmale zu richten.

**Bezugszeichenliste**
1 Waage
3 Energiewandler
4 Lichtstrahlen
10 Wägeeinheit
11 Anzeigevorrichtung
12 Wägeteller
13 Fußelement
14 Empfangseinheit
15 Sensoreinheit
16 Sendeeinheit
20 Konzentrator/ plankonvexe Linse
21 Konzentrator/ Fresnellinse
22 Konzentrator/ Spiegelelement
30 Halteelement

## Patentansprüche

1. Waage (1), insbesondere als Personenwaage, Küchenwaage, Backwaage, Diätwaage oder Briefwaage, mit
• einer Wägeeinheit (10),
• einem Energiewandler (3) zum Umwandeln von optischer Energie in elektrische Energie und
• einer von der elektrischen Energie gespeisten Steuerung mit einem Steuergerät zum Erzeugen von Bedienbefehlen,
wobei die Steuerung ein von der Waage zu messendes Gewicht über eine Anzeigevorrichtung auszugeben vermag und der Energiewandler elektrische Energie zum Betreiben der Waage, insbesondere zur Versorgung von Wägezellen und/oder der Anzeigevorrichtung, bereitstellt,
**dadurch gekennzeichnet, dass**
eine Messeinheit vorgesehen ist, die als Messwert für die von dem Energiewandler (3) umgewandelte Energie die erzeugte Spannung und/oder Stromstärke misst, und der Energiewandler (3) als Bedieneinheit (2) zum Bedienen zumindest einer Funktion der Waage (1) benutzbar ist, wobei hierzu die Steuerung derart ausgebildet ist, dass die Verringerung des Messwertes infolge eines vollständigen oder teilweisen Abdeckens des Energiewandlers (3) unterhalb eines festgelegten Schwellwertes einen Bedienbefehl zum Bedienen zumindest einer Funktion der Waage (1) auslöst.

2. Waage (1) nach Anspruch 1, **dadurch gekennzeichnet, dass** eine Mehrzahl von parallel oder in Reihe geschalteten Energiewandlern (3) vorgesehen sind, wobei zumindest zwei dieser Energiewandlern (3) zum Auslösen eines oder mehrerer Bedienbefehle verwendbar ist.

3. Waage (1) nach Anspruch 2, **dadurch gekennzeichnet, dass** der Messwert die aufsummierte Spannung und/oder Stromstärke aller Energiewandler (3) ist.

4. Waage (1) nach Anspruch 2, **dadurch gekennzeichnet, dass** der Messwert die Einzelspannung und/oder -stromstärke eines einzelnen Energiewandlers (3) ist.

5. Waage (1) nach einem der vorhergehenden Ansprüche, **dadurch gekennzeichnet, dass** mehrere Schwellwerte des Messwertes definiert sind, wobei jedem Schwellwert ein Bedienbefehl zum Bedienen zumindest einer Funktion der Waage (1) zugeordnet ist und das Unter- und/oder Überschreiten des jeweiligen Schwellschwertes die Bedienfunktion auslöst.

6. Waage (1) nach Anspruch 2, **dadurch gekennzeichnet, dass** mehrere Energiewandler in einer Reihe nebeneinander oder untereinander angeordnet sind, wobei jedem Energiewandler wenigstens ein Schwellwert zugeordnet ist und die Steuerung den zeitlichen Ablauf des Unterschreitens der Schwellwerte benachbarter Energiewandler (3) aufzeichnet und aus der zeitlichen Abfolge des Unterschreitens der jeweiligen Schwellwerte einen oder mehrere Bedienbefehle generiert.

7. Waage (1) nach einem der vorhergehenden Ansprüche, **dadurch gekennzeichnet, dass** je ein Energiewandler (3) an sich gegenüberliegenden Enden der Anzeigevorrichtung (11) angeordnet ist.

8. Waage (1) nach einem der vorhergehenden Ansprüche, **dadurch gekennzeichnet, dass** ein insbesondere als plankonvexe Linse (20), als Fresnellinse (21) oder als Spiegelelement (22) ausgebildeter Konzentrator an der Waage (1) vorgesehen ist, der die in ihn einfallenden Lichtstrahlen (4) zu dem Energiewandler (3) umlenkt, wobei der Energiewandler (3) insbesondere in einer Brennebene des Konzentrators angeordnet ist.

9. Waage (1) nach Anspruch 8, **dadurch gekennzeichnet, dass** der Konzentrator an einer Innenseite des Wägetellers (12) angebracht sind, wobei der Wägeteller (12) und/oder der Konzentrator aus einem transparenten Material besteht.

10. Waage (1) nach einem der vorhergehenden Ansprüche, **dadurch gekennzeichnet, dass** die die Wägeeinheit (10) begrenzenden Wände aus einem reflektierenden Material bestehen.

11. Verfahren zum Bedienen einer Funktion einer Waage (1), die eine Wägeeinheit (10), einen Energiewandler (3) zum Umwandeln von optischer Energie in elektrische Energie und eine von der elektrischen Energie gespeiste, mit einem Steuergerät zum Erzeugen von Bedienbefehlen versehene Steuerung aufweist, die ein von der Waage zu messendes Gewicht über eine Anzeigevorrichtung auszugeben vermag, wobei der Energiewandler elektrische Energie zum Betreiben der Waage, insbesondere von Wägezellen und/oder der Anzeigevorrichtung, bereitstellt, **dadurch gekennzeichnet, dass** durch ein Abdecken zumindest eines Bereichs des Energiewandlers (3) in einer Weise, dass in den Energiewandler weniger Licht oder kein Lichtstrahl einfallen kann, ein Bedienbefehl erzeugt wird, der zum Bedienen einer Funktion der Waage (1) benutzt wird, wobei ein Messwert des Energiewandlers (3) gemessen wird, wobei ein Bedienbefehl erzeugt wird, wenn der gemessene Messwert einen vordefinierten Grenzwerts unter- oder überschreitet.

12. Verfahren nach dem vorhergehenden Anspruch, **dadurch gekennzeichnet, dass** nach einem ganz oder teilweisen Abdecken des ersten Energieumwandlers (3) zum Erzeugen eines Bedienbefehls mindestens ein zweiter Energieumwandler (3) ganz oder teilweise abzudecken ist.

13. Verfahren nach Anspruch 12, **dadurch gekennzeichnet, dass** der zweite Energiewandler (3) innerhalb eines vordefinierten Zeitraums nach dem Abdecken des ersten Energiewandlers (3) abgedeckt wird, um einen Bedienbefehl zu erzeugen.

## Claims

1. Scales (1), in particular in the form of bathroom scales, kitchen scales, baking scales, diet scales or letter scales, having
• a weighing unit (10),
• an energy converter (3) for converting optical energy into electrical energy, and
• a controller, supplied by the electrical energy, with a control device for generating operating commands,
wherein the controller is capable of outputting via a display device a weight to be measured by the scales, and the energy converter provides electrical energy for operating the scales, in particular for supplying load cells and/or the display device,
**characterized in that**
a measurement unit is provided, which measures, as a measurement of the energy converted by the energy converter (3), the voltage and/or current generated, and the energy converter (3) can be used as an operating unit (2) for operating at least one function of the scales (1), wherein for this purpose the controller is designed such that the reduction of the measurement result due to a full or partial covering of the energy converter (3) below a specified threshold value triggers an operating command to operate at least one function of the scales (1).

2. The scales (1) according to Claim 1, **characterized in that** a majority of energy converters (3) connected in parallel or in series are provided, wherein at least two of these energy converters (3) can be used to trigger one or more operating commands.

3. The scales (1) according to Claim 2, **characterized in that** the measurement value is the total voltage and/or current of all energy converters (3).

4. The scales (1) according to Claim 2, **characterized in that** the reading is the individual voltage and/or individual current of an individual energy converter (3).

5. The scales (1) according to any one of the preceding claims, **characterized in that** multiple threshold values of the measurement are defined, each threshold being assigned an operating command for operating at least one function of the scale (1) and the undershoot and/or overshoot of the respective threshold value triggering the operating function.

6. The scales (1) according to Claim 2, **characterized in that** multiple energy converters are arranged in series next to each other or one above the other, wherein each energy converter is assigned at least one threshold value and the controller records the temporal progress of the undershooting of the threshold of adjacent energy converters (3), and from the temporal sequence of the undershooting of the respective threshold values generates one or more operating commands.

7. The scales (1) according to any one of the preceding claims, **characterized in that** one energy converter (3) is arranged at each of the opposite ends of the display device (11).

8. The scales (1) according to one of the preceding claims, **characterized in that** a concentrator, configured in particular as a plano-convex lens (20), as a Fresnel lens (21) or as a mirror element (22), is provided on the scales (1), which deflects the light rays (4) incident thereon to the energy converter (3), wherein the energy converter (3) is in particular arranged in a focal plane of the concentrator.

9. The scales (1) according to Claim 8, **characterized in that** the concentrator is mounted on an internal side of the weighing plate (12), and the weighing plate (12) and/or the concentrator consists of a transparent material.

10. The scales (1) according to any one of the preceding claims, **characterized in that** the walls bounding the weighing unit (10) consist of a reflective material.

11. Method for operating a function of a scales (1) having a weighing unit (10), an energy converter (3) for converting optical energy into electrical energy and a controller supplied by the electrical energy and fitted with a control device for generating operating commands, said controller being capable of outputting via a display device a weight to be measured by the scales, wherein the energy converter provides electrical energy for operating the scales, and in particular load cells and/or the display device, **characterized in that** by covering at least one area of the energy converter (3) in such a manner that less or no light radiation can be incident on the energy converter, an operating command is generated which is used to operate a function of the scales (1), wherein a measurement of the energy converter (3) is measured, wherein an operating command is generated if the measurement undershoots or exceeds a predefined threshold value.

12. The method according to the preceding claim, **characterized in that** after a full or partial covering of the first energy converter (3), in order to generate an operating command at least one second energy converter (3) must be fully or partially covered.

13. The method according to Claim 12, **characterized in that** the second energy converter (3) is covered within a predefined period of time after the covering of the first energy converter (3), in order to generate an operating command.

## Revendications

1. Balance (1), en particulier en tant que pèse-personne, balance de cuisine, balance à pâtisserie, balance de régime ou pèse-lettre, avec
• une unité de pesage (10),
• un convertisseur d'énergie (3) pour convertir de l'énergie optique en énergie électrique, et
• une commande alimentée par l'énergie électrique avec un appareil de commande pour générer des instructions de commande,
la commande pouvant faire sortir un poids à mesurer par la balance grâce à un dispositif d'affichage et le convertisseur d'énergie mettant à disposition de l'énergie électrique pour faire fonctionner la balance, en particulier pour alimenter des cellules de pesage et/ou le dispositif d'affichage,
**caractérisée en ce que**
une unité de mesurage est prévue, laquelle mesure en guise de valeur de mesure pour l'énergie convertie par le convertisseur d'énergie (3) la tension générée et/ou l'intensité du courant, et le convertisseur d'énergie (3) pouvant être utilisé en tant qu'unité de commande (2) pour commander au moins une fonction de la balance (1), la commande étant réalisée à cet effet de manière à ce que l'abaissement de la valeur mesurée suite à un recouvrement total ou partiel du convertisseur d'énergie (3) au-dessous d'une valeur de seuil prédéterminée déclenche une instruction de commande pour commander au moins une fonction de la balance (1).

2. Balance (1) selon la revendication 1, **caractérisée en ce que** l'on prévoit une pluralité de convertisseurs d'énergie (3) montés en parallèle ou en série, au moins deux de ces convertisseurs d'énergie (3) pouvant être utilisés pour déclencher une ou plusieurs instructions de commande.

3. Balance (1) selon la revendication 2, **caractérisée en ce que** la valeur de mesure est l'addition de la tension et/ou de l'intensité de courant de tous les convertisseurs d'énergie (3).

4. Balance (1) selon la revendication 2, **caractérisée en ce que** la valeur de mesure est la tension individuelle et/ou l'intensité de courant individuelle d'un seul convertisseur d'énergie (3).

5. Balance (1) selon l'une des revendications précédentes, **caractérisée en ce que** l'on définit plusieurs valeurs de seuil de la valeur de mesure, une instruction de commande pour commander au moins une fonction de la balance (1) étant associée à chaque valeur de seuil et le dépassement par le bas et/ou le haut de la valeur de seuil respective déclenchant la fonction de commande.

6. Balance (1) selon la revendication 2, **caractérisée en ce que** plusieurs convertisseurs d'énergie sont disposés sur une rangée les uns à côté des autres ou les uns en-dessous des autres, au moins une valeur de seuil étant associée à chaque convertisseur d'énergie et la commande enregistrant le déroulement chronologique du dépassement par le bas des valeurs de seuil de convertisseurs d'énergie (3) adjacents et générant à partir de la séquence chronologique de dépassement par le bas des valeurs de seuil respectives une ou plusieurs instructions de commande.

7. Balance (1) selon l'une des revendications précédentes, **caractérisée en ce que** respectivement un convertisseur d'énergie (3) est disposé à des extrémités situées en vis-à-vis du dispositif d'affichage (11).

8. Balance (1) selon l'une des revendications précédentes, **caractérisée en ce que** l'on prévoit un concentrateur sur la balance (1) réalisé en particulier en tant que lentille plan-convexe (20), en tant que lentille de Fresnel (21) ou en tant qu'élément spéculaire (22), lequel fait dévier les rayons lumineux (4) rencontrant sa surface vers le convertisseur d'énergie (3), le convertisseur d'énergie (3) étant en particulier disposé dans un plan focal du concentrateur.

9. Balance (1) selon la revendication 8, **caractérisée en ce que** le concentrateur est mis en place sur un côté intérieur du plateau de pesage (12), le plateau de pesage (12) et/ou le concentrateur se composant d'un matériau transparent.

10. Balance (1) selon l'une des revendications précédentes, **caractérisée en ce que** les parois délimitant l'unité de pesage (10) se composent d'un matériau réfléchissant.

11. Procédé pour commander une fonction d'une balance (1) laquelle présente une unité de pesage (10), un convertisseur d'énergie (3) pour convertir de l'énergie optique en énergie électrique et une commande alimentée avec l'énergie électrique, munie d'un appareil de commande pour générer des instructions de commande, laquelle peut indiquer un poids à mesurer par la balance grâce à un dispositif d'affichage, le convertisseur d'énergie mettant à disposition de l'énergie électrique pour faire fonctionner la balance, en particulier des cellules de pesage et/ou le dispositif d'affichage, **caractérisé en ce que**, grâce à un recouvrement d'au moins une zone du convertisseur d'énergie (3) de manière à ce que moins de lumière soit incidente sur le convertisseur d'énergie ou bien à ce qu'aucun rayon lumineux ne soit incident sur celui-ci, une instruction de commande est générée, laquelle est utilisée pour commander une fonction de la balance (1), une valeur de mesure du convertisseur d'énergie (3) étant mesurée, une instruction de commande étant générée lorsque la valeur de mesure mesurée dépasse par le bas ou le haut une valeur de seuil prédéterminée.

12. Procédé selon la revendication précédente, **caractérisé en ce qu'**après un recouvrement total ou partiel du premier convertisseur d'énergie (3) pour la génération d'une instruction de commande, au moins un deuxième convertisseur d'énergie (3) doit être totalement ou partiellement recouvert.

13. Procédé selon la revendication 12, **caractérisé en ce que** le deuxième convertisseur d'énergie (3) est recouvert dans un laps de temps prédéterminé après le recouvrement du premier convertisseur d'énergie (3) afin de générer une instruction de commande.
